# EUROPÄISCHE PATENTANMELDUNG

(11) **EP 1 623 786 A2**
(43) Veröffentlichungstag der Anmeldung: **08.02.2006**
(21) Anmeldenummer: 05013752.0
(22) Anmeldetag: 25.06.2005
(51) Int. Cl.: B23K 9/133

(54) **Schweissautomat**

(30) Priorität: 08.07.2004 DE 102004033300
(71) Anmelder: Haane, Franz, D-46325 Borken (DE)
(72) Erfinder: Haane, Franz, D-46325 Borken (DE)
(74) Vertreter: Rohmann, Michael

(57) **Zusammenfassung**

Schweißautomat zum Drahtschweißen, mit zumindest einer Drahtvorschubvorrichtung und einem Schweißbrenner, aus dem Draht einem Werkstück zur Schweißbearbeitung zuführbar ist. Der Schweißbrenner weist zumindest drei Zuführungskanäle für die Zufuhr jeweils eines Drahtes auf. Es ist ein erster Zuführungskanal vorgesehen, durch den ein Draht für ein Eindrahtschweißen zuführbar ist. Es sind ein zweiter und ein dritter Zuführungskanal vorgesehen, durch welche Zuführungskanäle alternativ zwei Drähte für ein Doppeldrahtschweißen zuführbar sind.

## Beschreibung

Die Erfindung betrifft einen Schweißautomaten zum Drahtschweißen, mit einer Drahtvorschubvorrichtung und einem Schweißbrenner, aus dem der Draht einem Werkstück zur Schweißbearbeitung zuführbar ist.

Aus der Praxis sind verschiedene Schweißautomaten der vorstehend genannten Art bekannt. So gibt es Schweißautomaten für das sogenannte Eindrahtschweißen bzw. Einfachdrahtschweißen, von denen lediglich ein Draht bzw. eine Drahtelektrode zugeführt wird. Diese Schweißautomaten weisen einen einzigen Schweißbrenner auf. Das Eindrahtschweißen wird in der Regel dort eingesetzt, wo ein relativ hoher Einbrand gewünscht wird. Dieses Verfahren findet insbesondere Anwendung beim Schweißen von Wurzellagen. Der Nachteil des Eindrahtschweißens liegt darin, dass nur eine verhältnismäßig geringe Abschmelzleistung erreicht wird. Weiterhin sind Schweißautomaten bekannt, mit denen das sogenannte Doppeldrahtschweißen möglich ist. Hier werden zwei dünnere Drähte bzw. Drahtelektroden zugeführt. Beim Doppeldrahtschweißen wird in vorteilhafter Weise eine hohe Abschmelzleistung erreicht. Allerdings ist hier der Einbrand relativ gering. Deshalb ist das Doppeldrahtschweißen für das Schweißen von Wurzellagen weniger zweckmäßig und eignet sich eher für das Schweißen von Fülllagen. Wenn ein Wechsel vom Eindrahtschweißen zum Doppeldrahtschweißen oder umgekehrt gewünscht wird, sind entweder zwei unterschiedliche Schweißautomaten erforderlich oder es sind verhältnismäßig aufwendige Umrüst- bzw. Umbaumaßnahmen erforderlich.

Demgegenüber liegt der Erfindung das technische Problem zugrunde, einen Schweißautomaten anzugeben, der sich sowohl für ein Eindrahtschweißen (Einfachdrahtschweißen) als auch für ein Doppeldrahtschweißen eignet und bei dem beim Wechsel vom Eindrahtschweißen zum Doppeldrahtschweißen und umgekehrt aufwendige Umrüst- bzw. Umbaumaßnahmen vermieden werden können.

Zur Lösung dieses technischen Problems lehrt die Erfindung einen Schweißautomaten zum Drahtschweißen, - mit einer Drahtvorschubvorrichtung und einem Schweißbrenner, aus dem Draht einem Werkstück zur Schweißbearbeitung zuführbar ist,
wobei der Schweißbrenner zumindest drei Zuführungskanäle für die Zufuhr jeweils eines Drahtes aufweist,
wobei ein erster Zuführungskanal vorgesehen ist, durch den ein Draht für ein Eindrahtschweißen zuführbar ist
und wobei zumindest ein zweiter und zumindest ein dritter Zuführungskanal vorgesehen sind, durch welche Zuführungskanäle alternativ zwei Drähte für ein Doppeldrahtschweißen zuführbar sind.

Alternativ meint hier, dass mit dem Schweißautomaten entweder ein Eindrahtschweißen oder ein Doppeldrahtschweißen möglich ist. Zwischen Eindrahtschweißen und Doppeldrahtschweißen kann gewählt werden und die gewünschte Schweißmethode entsprechend eingestellt werden. Der Erfindung liegt insoweit die Erkenntnis zugrunde, dass ein Wechsel zwischen Eindrahtschweißen und Doppeldrahtschweißen mit nur einem Schweißautomaten möglich ist, der lediglich einen einzigen Schweißbrenner aufweist. Dieser einzige Schweißbrenner weist die zumindest drei Zuführungskanäle für die Zufuhr der jeweils erforderlichen Drähte auf.

Wenn ein Eindrahtschweißen gewünscht ist, wird durch den ersten Zuführungskanal lediglich ein, in der Regel dickerer Draht zugeführt, während durch die übrigen Zuführungskanäle kein Draht zugeführt wird. Wenn ein Doppeldrahtschweißen gewünscht ist, wird lediglich durch den zweiten und den dritten Zuführungskanal jeweils ein in der Regel dünnerer Draht zugeführt, während durch den ersten Zuführungskanal kein Draht zugeführt wird. Grundsätzlich könnte auch durch den zweiten Zuführungskanal oder durch den dritten Zuführungskanal lediglich ein einziger Draht zugeführt werden und dann mit diesem Draht ein Eindrahtschweißen durchgeführt werden.

Es liegt im Rahmen der Erfindung, dass die Drahtvorschubvorrichtung des Schweißautomaten zumindest eine Vorschubrolle und zumindest eine auf die Vorschubrolle einwirkende Andrückrolle aufweist. Mit Hilfe der Vorschubrolle und der Andrückrolle wird der Draht bzw. werden die Drähte zum Schweißbrenner bzw. zur Spitze des Schweißbrenners vorgeschoben. Vorzugsweise weist der erfindungsgemäße Schweißautomat in einer Drahtvorschubvorrichtung lediglich eine Vorschubrolle auf. Nach einer Ausführungsform sind zwei nebeneinander angeordnete Andrückrollen vorgesehen, die zum Vorschub des Drahtes bzw. der Drähte auf die Vorschubrolle einwirken.

Zweckmäßigerweise weist die Vorschubrolle zumindest drei Führungsrillen für die Führung jeweils eines Drahtes auf. Mit anderen Worten ist durch jede dieser Führungsrillen ein Draht führbar. Bei einer Rotation der Vorschubrolle und bei Wechselwirkung von Vorschubrolle und Andrückrolle bzw. Andrückrollen wird dann also zumindest ein Draht entsprechend vorgeschoben. Es liegt im Rahmen der Erfindung, dass eine erste Führungsrille vorgesehen ist, durch die ein einziger Draht für ein Eindrahtschweißen geführt bzw. vorgeschoben wird. Es liegt fernerhin im Rahmen der Erfindung, dass die Vorschubrolle eine zweite und eine dritte Führungsrille aufweist, durch die alternativ zum Eindrahtschweißen zwei Drähte für ein Doppeldrahtschweißen geführt bzw. vorgeschoben werden.

Wenn mit dem erfindungsgemäßen Schweißautomaten ein Eindrahtschweißen durchgeführt werden soll, wird lediglich ein, in der Regel dickerer Draht zugeführt bzw. vorgeschoben. Wenn dagegen der Schweißautomat für ein Doppeldrahtschweißen eingesetzt werden soll, werden zwei Drähte zugeführt, die in der Regel dünner sind als der vorgenannte Draht für das Eindrahtschweißen. Insoweit liegt es im Rahmen der Erfindung, dass die erste Führungsrille für den Vorschub eines Drahtes zum Eindrahtschweißen einen größeren Durchmesser aufweist als die zweite und die dritte Führungsrille für den Vorschub der beiden Drähte zum Doppeldrahtschweißen. Größerer Durchmesser der Führungsrille meint hier insbesondere, dass die erste Führungsrille eine größere Öffnungsweite und/oder eine größere Tiefe aufweist als die zweite und die dritte Führungsrille. Zweckmäßigerweise ist die erste Führungsrille mittig zwischen der zweiten und der dritten Führungsrille in der Vorschubrolle angeordnet.

Es liegt im Rahmen der Erfindung, dass der Schweißbrenner des erfindungsgemäßen Schweißautomaten an seinem werkstückseitigen Ende zwei aneinanderliegende Kontaktbacken aufweist, wobei jede Kontaktbacke jeweils zumindest drei Teilkanäle aufweist, welche Teilkanäle sich im aneinanderliegenden Zustand der Kontaktbacken zu den vollständigen Zuführungskanälen ergänzen. Die Teilkanäle erstrecken sich in Längsrichtung jeder Kontaktbacke. Wenn nach bevorzugter Ausführungsform der Erfindung die Zuführungskanäle für die Drähte einen kreisförmigen Querschnitt aufweisen, so sind die Teilkanäle in den Kontaktbacken jeweils im Querschnitt halbrund bzw. halbkreisförmig ausgebildet. Es liegt im Rahmen der Erfindung, dass eine Andrückeinrichtung vorgesehen ist, mit der die beiden Kontaktbacken zusammengehalten werden bzw. zusammengedrückt werden.

Zweckmäßigerweise sind die Zuführungskanäle in dem Schweißbrenner parallel zueinander angeordnet bzw. im Wesentlichen parallel zueinander angeordnet. Nach besonders bevorzugter Ausführungsform der Erfindung ist der erste Zuführungskanal zwischen dem zweiten und dem dritten Zuführungskanal angeordnet. Dabei ist der erste Zuführungskanal bevorzugt mittig zwischen den beiden anderen Zuführungskanälen angeordnet, so dass er den gleichen Abstand bzw. im Wesentlichen den gleichen Abstand zum zweiten Zuführungskanal und zum dritten Zuführungskanal hat.

Nach sehr bevorzugter Ausführungsform der Erfindung weist der erste Zuführungskanal zumindest im Bereich der Kontaktbacken oder zumindest am schweißseitigen bzw. werkstückseitigen Ende der Kontaktbacken einen größeren Durchmesser auf als der zweite und als der dritte Zuführungskanal. Zweckmäßigerweise ist der Durchmesser des ersten Zuführungskanals dabei 1,5 mal bis 2,5 mal so groß, vorzugsweise zweimal so groß oder etwa zweimal so groß wie der Durchmesser des zweiten Zuführungskanals oder der Durchmesser des dritten Zuführungskanals. Es wurde bereits oben dargelegt, dass der erste Zuführungskanal für die Zuführung eines Drahtes zum Eindrahtschweißen vorgesehen ist. Beim Eindrahtschweißen wird normalerweise ein dickerer Draht als beim Doppeldrahtschweißen verwendet. Der Draht zum Eindrahtschweißen hat zweckmäßigerweise eine Dicke von 2 bis 6 mm, vorzugsweise eine Dicke von 3 mm oder eine Dicke von 4 mm oder eine Dicke von 5 mm. Es liegt im Rahmen der Erfindung, dass in Abhängigkeit von dem Durchmesser des eingesetzten Drahtes der Durchmesser des ersten Zuführungskanals bemessen ist. Vorzugsweise weisen der zweite und der dritte Zuführungskanal den gleichen Durchmesser bzw. im Wesentlichen den gleichen Durchmesser auf. Wie oben bereits dargelegt, wird beim Doppeldrahtschweißen mit im Vergleich zum Eindrahtschweißen dünneren Drähten gearbeitet. Zweckmäßigerweise werden hier Drähte eingesetzt, die einen Durchmesser von 1,2 bis 3 mm, vorzugsweise von 1,2 bis 2,5 mm haben. Bevorzugt werden zum Doppeldrahtschweißen Drähte mit einem Durchmesser von 1,6 mm oder einem Durchmesser von 2,0 mm oder einem Durchmesser von 2,5 mm eingesetzt.

Nach besonders bevorzugter Ausführungsform ist der erfindungsgemäße Schweißautomat mit einer Klemmvorrichtung ausgestattet, die zur klemmenden Fixierung des jeweils nicht vorgeschobenen Drahtes bzw. der jeweils nicht vorgeschobenen Drähte vorgesehen ist. Es liegt somit im Rahmen der Erfindung, dass für den erfindungsgemäßen Schweißautomaten drei Drähte zur Verfügung stehen, die jeweils wahlweise zum Schweißen eingesetzt werden können oder in der Klemmvorrichtung klemmend fixiert werden. Wenn also mit dem erfindungsgemäßen Schweißautomat ein Eindrahtschweißen durchgeführt wird, werden die beiden für das Doppeldrahtschweißen vorgesehenen Drähte in der Klemmvorrichtung klemmend fixiert. Diese beiden Drähte befinden sich dann nicht in der Drahtvorschubvorrichtung und auch nicht in dem Schweißbrenner. Hier befindet sich lediglich der eine Draht für das Eindrahtschweißen. Wenn andererseits ein Doppeldrahtschweißen mit dem erfindungsgemäßen Schweißautomaten durchgeführt werden soll, wird der für das Eindrahtschweißen vorgesehene Draht in der Klemmvorrichtung klemmend fixiert und die beiden für das Doppeldrahtschweißen vorgesehenen Drähte werden durch die Drahtvorschubvorrichtung und durch den Schweißbrenner geführt. Mit anderen Worten wird der Draht bzw. werden die Drähte, deren Vorschub bzw. Förderung gerade nicht erforderlich ist in der Klemmvorrichtung fixiert.

Mit dem erfindungsgemäßen Schweißautomaten ergeben sich mehrere Schweißmöglichkeiten: Wenn ein höherer Einbrand gewünscht ist, wird der dem ersten Zuführungskanal zugeordnete Draht zugeführt und mit diesem Draht wird dann ein Eindrahtschweißen durchgeführt. Auf diese Weise werden insbesondere Wurzellagen geschweißt. Wenn ein Eindrahtschweißen mit geringerer Leistung bzw. mit geringerem Einbrand gewünscht wird, kann auch ein im Vergleich zu dem vorgenannten Draht dünnerer Draht entweder durch den zweiten Zuführungskanal oder den dritten Zuführungskanal als einziger Draht zugeführt werden und mit diesem dünnen Draht kann dann ein Eindrahtschweißen durchgeführt werden. Wenn eine hohe Abschmelzleistung bei mittlerem Einbrand gewünscht ist, werden zwei dünnere Drähte durch den zweiten Zuführungskanal und durch den dritten Zuführungskanal zugeführt und ein Doppeldrahtschweißen durchgeführt. Durch den ersten Zuführungskanal wird dann kein Draht zugeführt. Hervorzuheben ist, dass diese alternativen Schweißmöglichkeiten ohne jeglichen aufwendigen Umbau des Schweißautomaten zur Verfügung stehen. Erfindungsgemäß sind also keine aufwendigen Umbau- oder Umrüstmaßnahmen erforderlich. Nur wenn Drähte unterschiedlichen Durchmessers eingesetzt werden sollen, ist ein Komponentenwechsel erforderlich. Allerdings müssen dann bei einer bevorzugten Ausführungsform des Schweißautomaten lediglich die Vorschubrolle und die Kontaktbacken gewechselt werden. - Gegenstand der Erfindung ist im Übrigen auch ein Verfahren nach Patentanspruch 10 bzw. nach Patentanspruch 11.

Der Erfindung liegt die Erkenntnis zugrunde, dass mit einem einzigen Schweißautomaten bzw. mit einem einzigen Schweißbrenner bzw. Schweißkopf dieses Schweißautomaten sowohl ein Eindrahtschweißen als auch ein Doppeldrahtschweißen auf einfache und problemlose Weise möglich ist. Im Vergleich zu den aus dem Stand der Technik bekannten Vorrichtungen entfallen bei dem erfindungsgemäßen Schweißautomaten aufwendige Umbau- bzw. Umrüstmaßnahmen bei einem Wechsel der Schweißverfahrensweise. Insoweit sind mit dem erfindungsgemäßen Schweißautomaten Schweißarbeiten kostengünstig durchführbar. Hervorzuheben ist weiterhin, dass der erfindungsgemäße Schweißautomat relativ einfach herstellbar ist und sich deshalb ebenfalls durch Kostengünstigkeit auszeichnet. Nachfolgend wird die Erfindung anhand einer lediglich ein Ausführungsbeispiel darstellenden Zeichnung näher erläutert. Es zeigen in schematischer Darstellung:
- **Fig. 1**: einen erfindungsgemäßen Schweißautomaten,
- **Fig. 2**: eine Seitenansicht im Schnitt durch den Gegenstand nach Fig. 1,
- **Fig. 3**: eine Draufsicht auf den Gegenstand gemäß Fig. 1 ausschnittsweise,
- **Fig. 4a**: einen vergrößerten Ausschnitt aus der Fig. 3 bei einer ersten Verfahrensweise und
- **Fig. 4b**: den Gegenstand nach Fig. 4a bei einer anderen Verfahrensweise.

Die Figuren zeigen einen erfindungsgemäßen Schweißautomaten zum Drahtschweißen mit einer Drahtvorschubvorrichtung 1 und einem Schweißbrenner 2, aus dem Draht 3, 4, 5 einem nicht dargestellten Werkstück zur Schweißbearbeitung zurührbar ist. Der Schweißbrenner 2 weist im Ausführungsbeispiel drei Zuführungskanäle 6, 7, 8 für die Zufuhr jeweils eines Drahtes 3, 4, 5 auf. Es ist ein erster Zuführungskanal 6 vorgesehen, durch den ein Draht 3 für ein Eindrahtschweißen zuführbar ist. Fernerhin ist im Ausführungsbeispiel nach den Figuren ein zweiter Zuführungskanal 7 und ein dritter Zuführungskanal 8 vorgesehen. Durch diese beiden letztgenannten Zurührungskanäle 7, 8 sind alternativ zum Eindrahtschweißen zwei Drähte 4, 5 für ein Doppeldrahtschweißen zuführbar.

Die Drahtvorschubvorrichtung besteht vorzugsweise und im Ausführungsbeispiel aus einer Vorschubrolle 9 und zwei nebeneinander angeordneten Andrückrollen 10, 11, die je nach Bedarf auf die Vorschubrolle 9 einwirken bzw. gegen die Vorschubrolle 9 gedrückt werden. Die Vorschubrolle 9 weist drei Führungsrillen 12, 13, 14 für die Führung jeweils eines Drahtes 3, 4, 5 auf. Die erste Führungsrille 12 ist für den Vorschub eines dickeren Drahtes 3 zum Eindrahtschweißen vorgesehen. Dementsprechend weist diese erste Führungsrille 12 einen größeren Durchmesser bzw. eine größere Öffnungsweite und eine größere Tiefe auf als die zweite Führungsrille 13 und als die dritte Führungsrille 14. Die zweite Führungsrille 13 und die dritte Führungsrille 14 sind für den Vorschub von zwei dünneren Drähten zum Doppeldrahtschweißen vorgesehen.

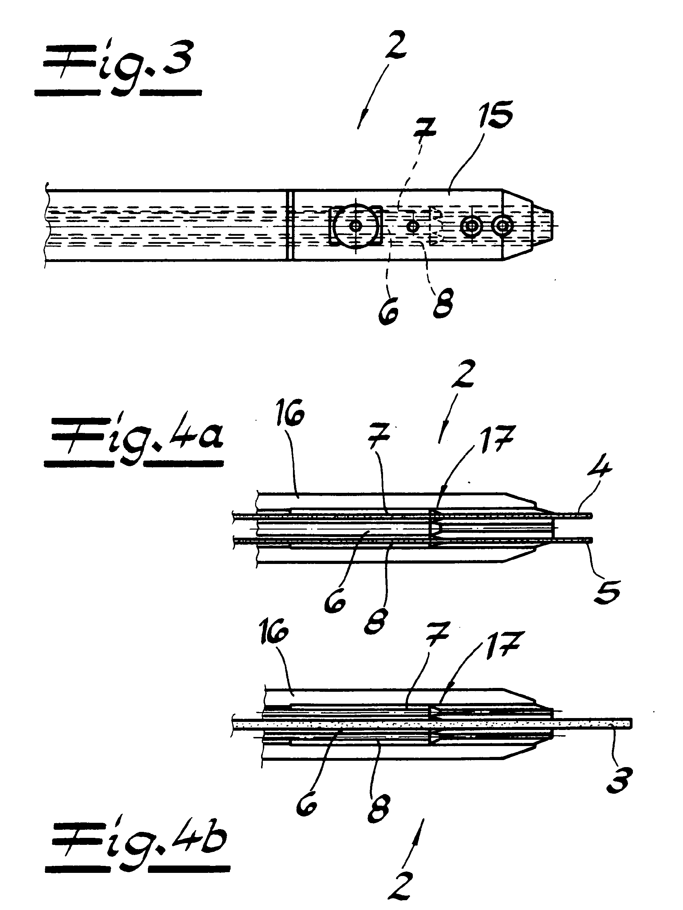

Der Schweißbrenner 2 weist an seinem werkstückseitigen Ende zwei aneinanderliegende Kontaktbacken 15, 16 auf, wobei jede Kontaktbacke 15, 16 jeweils drei Teilkanäle aufweist, welche Teilkanäle sich im aneinanderliegenden Zustand der Kontaktbacken 15, 16 zu den Zuführungskanälen 6, 7, 8 ergänzen. Insbesondere in den Figuren 4a und 4b ist erkennbar, dass der erste Zuführungskanal 6 für das Eindrahtschweißen zwischen dem zweiten und dem dritten Zuführungskanal 7, 8 angeordnet ist. Vorzugsweise und im Ausführungsbeispiel ist dabei der erste Zuführungskanal 6 mittig angeordnet, d. h. mit gleichem Abstand zum zweiten Zuführungskanal 7 und zum dritten Zuführungskanal 8. Den Fig. 4a und 4b ist auch entnehmbar, dass die Zuführungskanäle 6, 7, 8 zunächst einen weiteren Durchmesser aufweisen und sich dann allesamt am schweißseitigen bzw. am werkstückseitigen Ende des Brenners nach Maßgabe des Drahtdurchmessers verjüngen. Mit anderen Worten weisen die Zuführungskanäle 6, 7, 8 an diesem schweißseitigen bzw. werkstückseitigen Ende des Schweißbrenners 2 einen dem jeweiligen Draht 4, 5, 6 entsprechenden oder im Wesentlichen entsprechenden Durchmesser auf. Es ist auch erkennbar, dass in diesem verjüngten Bereich 17 der Zuführungskanäle 6, 7, 8 der erste Zuführungskanal 6 einen größeren Durchmesser aufweist als der zweite Zuführungskanal 7 und als der dritte Zuführungskanal 8. Im Ausführungsbeispiel ist der Durchmesser des ersten Zuführungskanals 6 im verjüngten Bereich 17 für einen Durchmesser des Drahtes 3 von 4 mm ausgelegt. Der zweite und der dritte Zuführungskanal 7, 8, die zweckmäßigerweise den gleichen Durchmesser aufweisen, sind im Ausführungsbeispiel für die Führung von Drähten 4, 5 mit einem Durchmesser von 2 mm ausgelegt. Der erste Zuführungskanal 6 hat in diesem Ausführungsbeispiel also den doppelten oder etwa den doppelten Durchmesser wie der zweite Zuführungskanal 7 oder der dritte Zuführungskanal 8. Die in den Figuren dargestellte Ausführungsform macht es möglich, dass bei einer Änderung des Drahtdurchmessers beim Eindrahtschweißen und/oder beim Doppeldrahtschweißen lediglich die Vorschubrolle 9 und die Kontaktbacken 15, 16 ausgetauscht werden müssen. Mit anderen Worten werden Kontaktbacken 15, 16 und die Vorschubrolle 9 je nach dem gewünschten Drahtdurchmesser eingesetzt bzw. gewechselt.

Die Fig. 4a zeigt im Übrigen die Zufuhr zweier dünnerer Drähte 4, 5 für ein Doppeldrahtschweißen. Dagegen zeigt die Fig. 4b die Zufuhr eines dickeren Drahtes 3 für ein Eindrahtschweißen.

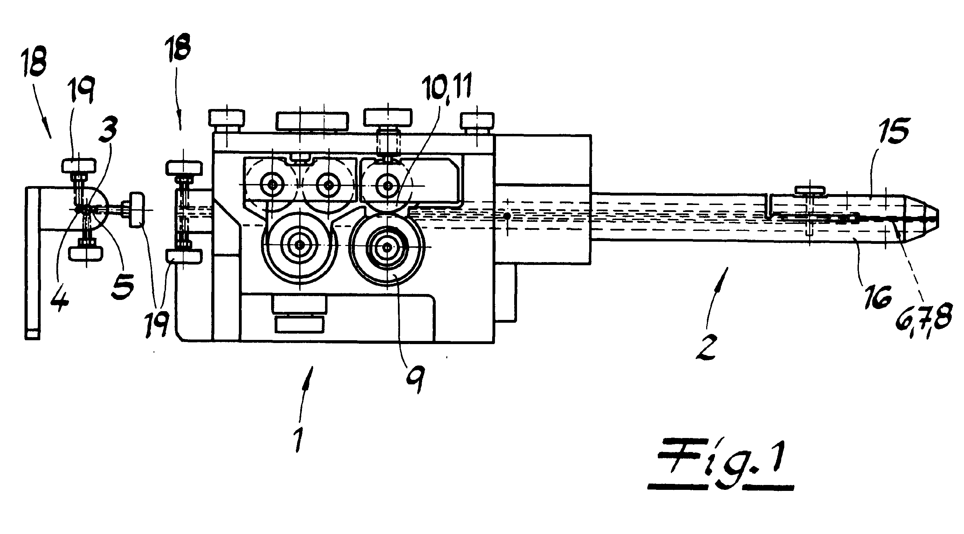

In der Fig. 1 ist eine Klemmvorrichtung 18 erkennbar, die drei Klemmschrauben 19 aufweist, die jeweils zur klemmenden Fixierung eines Drahtes 3, 4, 5 vorgesehen sind. Die Klemmvorrichtung 18 ist links in Fig. 1 zur Verdeutlichung als Einzelheit dargestellt. Der Draht 3, 4, 5 bzw. die Drähte 3, 4, 5, die gerade nicht gefördert werden bzw. zum Schweißen benötigt werden, müssen in der Klemmvorrichtung 18 fixiert werden. Nachfolgend wird ein erfindungsgemäßes Schweißverfahren an einem Ausführungsbeispiel erläutert:

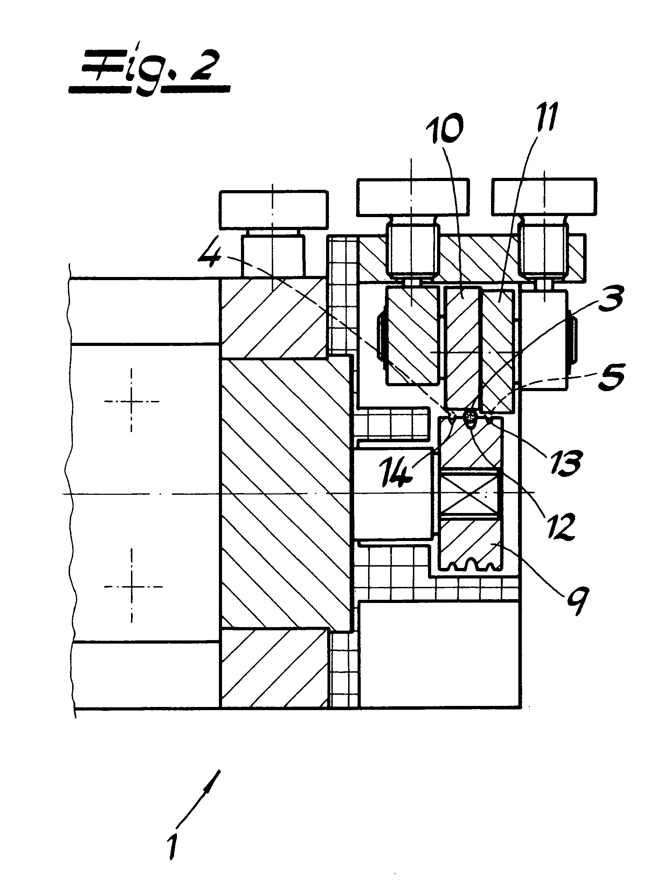

Wenn zunächst ein Eindrahtschweißen mit einem hohen Einbrand, beispielsweise zum Schweißen von Wurzellagen gewünscht wird, muss der dickere Draht 3, der beispielsweise einen Durchmesser von 4 mm hat, in den Bereich der Drahtvorschubvorrichtung 1 gezogen werden, so dass er in der ersten Führungsrille 12 der Vorschubrolle 9 liegt (Fig. 2). Anschließend wird dann die Andruckrolle 10 an die Vorschubrolle 9 angedrückt. Dann kann der Vorschub des Drahtes 3 durch den ersten Zuführungskanal 6 des Schweißbrenners 2 erfolgen und das Eindrahtschweißen kann durchgeführt werden. Währenddessen sind die beiden Drähte 4, 5 in der Klemmvorrichtung 18 klemmend fixiert, damit sie nicht versehentlich von der Drahtvorschubvorrichtung 1 ebenfalls gefördert werden. - Wenn anschließend ein Doppeldrahtschweißen mit geringerem Einbrand und höherer Abschmelzleistung gewünscht wird, muss zunächst der dickere Draht 3 bis zur Klemmvorrichtung 18 gezogen werden und dort mit der zugeordneten Klemmschraube 19 klemmend fixiert werden. Dann werden die beiden dünneren Drähte 4, 5 in den Bereich der Drahtvorschubvorrichtung 1 gezogen, so dass die Drähte 4, 5 in der zweiten Zuführungsrille 13 bzw. in der dritten Zuführungsrille 14 liegen. Dann werden die beiden Andrückrollen 10, 11 gegen die in den Zuführungsrillen 13, 14 der Vorschubrolle 9 liegenden Drähte 4, 5 gedrückt und der Vorschub der Drähte 4, 5 durch den Schweißbrenner 2 kann beginnen. Jetzt kann das Doppeldrahtschweißen durchgeführt werden.

## Patentansprüche

1. Schweißautomat zum Drahtschweißen, mit zumindest einer Drahtvorschubvorrichtung (1) und einem Schweißbrenner (2), aus dem Draht (3, 4, 5) einem Werkstück zur Schweißbearbeitung zuführbar ist, wobei der Schweißbrenner (2) zumindest drei Zuführungskanäle (6, 7, 8) für die Zufuhr jeweils eines Drahtes (3, 4, 5) aufweist, wobei ein erster Zuführungskanal (6) vorgesehen ist, durch den ein Draht (3) für ein Eindrahtschweißen zuführbar ist und wobei zumindest ein zweiter und zumindest ein dritter Zuführungskanal (7, 8) vorgesehen sind, durch welches Zuführungskanäle (7, 8) alternativ Drähte (4, 5) für ein Doppeldrahtschweißen zuführbar sind.

2. Schweißautomat nach Anspruch 1, wobei die Drahtvorschubvorrichtung (1) zumindest eine Vorschubrolle (9) und zumindest eine auf die Vorschubrolle (9) einwirkende Andrückrolle (10, 11) aufweist.

3. Schweißautomat nach einem der Ansprüche 1 oder 2, wobei die Vorschubrolle (9) zumindest drei Führungsrillen (12, 13, 14) für die Führung jeweils eines Drahtes (3, 4, 5) aufweist.

4. Schweißautomat nach Anspruch 3, wobei die erste Führungsrille (12) für den Vorschub eines Drahtes (3, 4, 5) zum Eindrahtschweißen einen größeren Durchmesser aufweist als die zweite und die dritte Führungsrille (13, 14) für den Vorschub der beiden Drähte (4, 5) zum Doppeldrahtschweißen.

5. Schweißautomat nach einem der Ansprüche 1 bis 4, wobei der Schweißbrenner (2) an seinem werkstückseitigen Ende zwei aneinanderliegende Kontaktbacken (15, 16) aufweist, wobei jede Kontaktbacke (15, 16) jeweils zumindest drei Teilkanäle aufweist, welche Teilkanäle sich im aneinanderliegenden Zustand der Kontaktbacken (15, 16) zu den Zuführungskanälen (6, 7, 8) ergänzen.

6. Schweißautomat nach einem der Ansprüche 1 bis 5, wobei der erste Zuführungskanal (6) zwischen dem zweiten und dem dritten Zuführungskanal (7, 8) angeordnet ist.

7. Schweißautomat nach einem der Ansprüche 1 bis 6, wobei der erste Zuführungskanal (6) einen größeren Durchmesser aufweist als der zweite und der dritte Zuführungskanal (7, 8).

8. Schweißautomat nach einem der Ansprüche 1 bis 7, wobei der zweite und der dritte Zuführungskanal (7, 8) den gleichen bzw. im Wesentlichen den gleichen Durchmesser aufweisen.

9. Schweißautomat nach einem der Ansprüche 1 bis 8, wobei eine Klemmvorrichtung (18) zur klemmenden Fixierung des jeweils nicht vorgeschobenen Drahtes (3, 4, 5) bzw. der nicht vorgeschobenen Drähte (3, 4, 5) vorgesehen ist.

10. Verfahren zum Eindrahtschweißen und Doppeldrahtschweißen, wobei zunächst ein erster Draht (3) durch einen ersten Zuführungskanal (6) eines Schweißbrenners (2) zugeführt wird und ein Eindrahtschweißen durchgeführt wird, während ein zweiter und ein dritter Draht (4, 5) ohne Vorschub fixiert werden, wobei anschließend der zweite und der dritte Draht (4, 5) durch einen zweiten und einen dritten Zuführungskanal (7, 8) des einen Schweißbrenners (2) zugeführt werden, während nunmehr der erste Draht (3) ohne Vorschub fixiert wird.

11. Verfahren zum Eindrahtschweißen und Doppeldrahtschweißen, wobei zunächst ein zweiter und ein dritter Draht (4, 5) durch einen zweiten und einen dritten Zuführungskanal (7, 8) eines Schweißbrenners (2) zugeführt werden und ein Doppeldrahtschweißen durchgeführt wird, während ein erster Draht (3) ohne Vorschub fixiert wird, wobei anschließend der erste Draht (3) durch einen ersten Zuführungskanal (6) des einen Schweißbrenners (2) zugeführt wird und ein Eindrahtschweißen durchgeführt wird, während nunmehr der zweite und der dritte Draht (4, 5) ohne Vorschub fixiert werden.
